# EUROPEAN PATENT APPLICATION

(11) **EP 4 608 002 A1**
(43) Date of publication of application: **27.08.2025**
(21) Application number: 25159112.9
(22) Date of filing: 20.02.2025
(51) Int. Cl.: H04W 28/02

(54) **METHODS AND DEVICES FOR LOAD MANAGEMENT IN A COMMUNICATION NETWORK**

(30) Priority: 22.02.2024 IN 202411012656
(71) Applicant: Nokia Solutions and Networks Oy, 02610 Espoo (FI)
(72) Inventor: ROUT, Bivudendu Pratap, 560077 Bangalore (IN); URIE, Alistair, 92130 Issy les Moulineaux (FR); AWAN, Daniyal Amir, 81735 Munich (DE); STEPHENS, Paul, Long Grove, 60047 (US)
(74) Representative: Novagraaf Technologies

(57) **Abstract**

An aspect concerns a method comprising, at a first communication network device:
- receiving a request from a second network device, wherein the request is for a given service to be provided by a network function of the first network device;
- responsive to the request, providing said given service;
- determining an overload state change of resources required, by the first device, for said given service provided by said network function, wherein an overload state change type is one of a change from an overloaded state to a non-overloaded state or a change from a non-overloaded state to an overloaded state;
- sending a message to the first device, wherein the message comprises information explicitly identifying at least said given service provided by said network function and the type of overload state change.

Other aspects concern a method at a second device and first and second devices.

## Description

### TECHNICAL FIELD

Various example embodiments relate generally to methods and devices for load management in a communication network, for example but not limited to an Open Radio Access Network or a Wi-Fi network.

### BACKGROUND

Network nodes, e.g. in a cellular network, typically provide services to network controllers. Such services can include carrying out measurements and consecutive reporting of the results, possibly on a periodic basis. A network controller can subscribe to such services. However, overload of resources allocated by a node for carrying out subscribed services may occur. Certain limits of an interface between a node and a network controller may also be reached. In such cases, the network controller may not be able to subscribe to additional services proposed.

It is desirable to handle resource overload in an efficient manner.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.
According to a first aspect, a method comprises at a first communication network device:
- receiving a request from a second network device, wherein the request is for a given service to be provided by a network function of the first network device;
- responsive to the request, providing said given service;
- determining an overload state change of resources required, by the first device, for said given service provided by said network function, wherein an overload state change type is one of a change from an overloaded state to a non-overloaded state or a change from a non-overloaded state to an overloaded state;
- sending a message to the second device, wherein the message comprises information explicitly identifying at least said given service provided by said network function and the type of overload state change.

The second network device is thus informed explicitly of an overloaded service. The second network device may still interact with other services of the same node, if any are present and not themselves overloaded. Control of / communication with the node thus remains at least partially possible in many situations.

According to one or more embodiments of the above method, if overload state changes are determined for (a) more than one service provided by a network function of the first device and/or (b) services within more than one network function of the first device, the message comprises information explicitly identifying each of said services for which overload state changes were determined.

According to one or more embodiments of the above method, said message further comprising an explicit identification of each network function providing a service identified in the message and for which an overload state change occurred.

According to one or more embodiments of the above method, the message further comprises information describing the resources of the first device concerned by the overload state change.

According to one or more embodiments of the above method, said resources comprise at least one among:
- resources allocated by said first device to said given service;
- bandwidth available on an interface between the first device and the second device for transmitting data provided by said given service from the first device to the second device.

According to one or more embodiments of the above method, providing a given service comprises sending data generated by the given service to the second device, the method further comprising:
- receiving from the second device a message indicative of an overload state change of resources of the second device available for handling processing concerning the given service;
- executing an action responsive to the overload state change of the resources of the second device;
- reporting the action to the second device.

According to one or more embodiments of the above method, when the overload state change is towards an overloaded state of resources of the second device for processing data sent by the first device to the second device when providing the given service, the action comprises pausing the given service.

According to one or more embodiments of the above method, when the overload state change is towards a non-overloaded state of the resources of the second device for processing data sent by the first device to the second device when providing the given service, the action comprises resuming the given service if it was paused.

According to one or more embodiments of the above method,a service is configured for at least one among;
- carrying out measurements for the second device and report measurement results;
- enabling control of the first device by the second device;
- providing information on a configuration of the first device or a configuration of resources controlled by the first device.

According to one or more embodiments of the above method, the first device is a Radio Access Network, RAN, node, the second device is a RAN intelligent controller, RIC, for controlling the RAN nodes, the subsystem is a RAN function and the service is a RIC service.
According to one or more embodiments of the above method, the first and second devices communicate through an O-RAN E2 interface and the RIC is a Near Real-Time RIC.

According to a second aspect, a method comprises, at a second communication network device:
- sending at least one request to a first network device, wherein the request is for a given service to be provided by a network function of the first network device;
- responsive to the request, receiving data generated by the service;
- receiving a message from the first device, wherein the message comprises information explicitly identifying at least said service and a type of overload state change of resources required, by the first device, for said service,
   wherein an overload state change type is one of a change from an overloaded state to a non-overloaded state or a change from a non-overloaded state to an overloaded state;
- executing an action responsive to the message.

According to one or more embodiments of the above method, if overload state changes occurred at the second device for a plurality of services, the message explicitly identifies said plurality of services.

According to one or more embodiments of the above method, said message further comprises an explicit identification of each network function providing a service identified in the message and for which an overload state change occurred.

According to one or more embodiments of the above method, the action comprises prohibiting sending additional requests for overloaded services identified in the message.

According to one or more embodiments of the above method, the method further comprises:
- determining an overload state change of resources allocated, by the second device, for handling processing concerning said given service,
- sending a message to the first device, wherein the message comprises information explicitly identifying at least the given service and the type of overload state change.

According to one or more embodiments of the above method, the message further comprises information describing the resources of the second device concerned by the overload state change.

According to one or more embodiments of the above method, the first device is a Radio Access Network, RAN, node, the second device is a RAN intelligent controller, RIC, for controlling the RAN nodes, the subsystem is a RAN function and the service is a RIC service.

According to one or more embodiments of the above method, the first and second devices communicate through an O-RAN E2 interface and the RIC is a Near Real-Time RIC.

According to third aspect, a first device comprises
- means for receiving a request from a second device, wherein the request is for a given service to be provided by a network function of the first network device;
- means for providing said service responsive to the request;
- means for determining an overload state change of resources required, by the first device, for said given service, wherein an overload state change type is one of a change from an overloaded state to a non-overloaded state or a change from a non-overloaded state to an overloaded state;
- means for sending a message to the second device, wherein the message comprises information explicitly identifying at least the given service and the type of overload state change.

The first device may comprise means for performing one or more or all steps of the method according to the first aspect. The means may include at least one processor and at least one memory storing instructions that, when executed by the at least one processor, cause the apparatus to perform one or more or all steps of a method according to the first aspect. The means may include circuitry (e.g. processing circuitry) to perform one or more or all steps of a method according to the first aspect.

According to fourth aspect, a second device comprises
- means for sending at least one subscription request to a first network device, wherein the request is for a given service to be provided by a network function of the first network device;
- means for receiving data generated by the service in response to the request;
- means for receiving a message from the first device, wherein the message comprises information explicitly identifying at least the given service and a type of overload state change of resources required, by the first device, for said given service,
   wherein an overload state change type is one of a change from an overloaded state to a non-overloaded state or a change from a non-overloaded state to an overloaded state;
- means for executing an action responsive to the message.

The second device may comprise means for performing one or more or all steps of the method according to the second aspect. The means may include at least one processor and at least one memory storing instructions that, when executed by the at least one processor, cause the apparatus to perform one or more or all steps of a method according to the second aspect. The means may include circuitry (e.g. processing circuitry) to perform one or more or all steps of a method according to the second aspect.

According to another aspect, a first device comprises at least one processor and at least one memory storing instructions that, when executed by the at least one processor, cause the first device to perform one or more or all steps of a method according to the first aspect.

According to another aspect, a second device comprises at least one processor and at least one memory storing instructions that, when executed by the at least one processor, cause the second device to perform one or more or all steps of a method according to the second aspect.

According to another aspect, a computer program comprises instructions that, when executed by a first device, cause the first device to perform:
- receiving a request from a second network device, wherein the request is for a given service to be provided by a network function of the first network device;
- responsive to the request, providing said given service;
- determining an overload state change of resources required, by the first device, for said given service provided by said network function, wherein an overload state change type is one of a change from an overloaded state to a non-overloaded state or a change from a non-overloaded state to an overloaded state;
- sending a message to the first device, wherein the message comprises information explicitly identifying at least said given service provided by said network function and the type of overload state change.

The instructions may cause the first device to perform one or more or all steps of a method according to the first aspect.

According to another aspect, a non-transitory computer readable medium comprises program instructions stored thereon for causing a first device to perform at least the following:
- receiving a request from a second network device, wherein the request is for a given service to be provided by a network function of the first network device;
- responsive to the request, providing said given service;
- determining an overload state change of resources required, by the first device, for said given service provided by said network function, wherein an overload state change type is one of a change from an overloaded state to a non-overloaded state or a change from a non-overloaded state to an overloaded state;
- sending a message to the first device, wherein the message comprises information explicitly identifying at least said given service provided by said network function and the type of overload state change.

The program instructions may cause the first device to perform one or more or all steps of a method according to the first aspect.

According to another aspect, a computer program comprises instructions that, when executed by a second device, cause the second device to perform:
- sending at least one request to a first network device, wherein the request is for a given service to be provided by a network function of the first network device;
- responsive to the request, receiving data generated by the service;
- receiving a message from the first device, wherein the message comprises information explicitly identifying at least said service and a type of overload state change of resources required, by the first device, for said service,
   wherein an overload state change type is one of a change from an overloaded state to a non-overloaded state or a change from a non-overloaded state to an overloaded state;
- executing an action responsive to the message.

The instructions may cause the second device to perform one or more or all steps of a method according to the second aspect.

According to another aspect, a non-transitory computer readable medium comprises program instructions stored thereon for causing a second device to perform at least the following:
- sending at least one request to a first network device, wherein the request is for a given service to be provided by a network function of the first network device;
- responsive to the request, receiving data generated by the service;
- receiving a message from the first device, wherein the message comprises information explicitly identifying at least said service and a type of overload state change of resources required, by the first device, for said service,
   wherein an overload state change type is one of a change from an overloaded state to a non-overloaded state or a change from a non-overloaded state to an overloaded state;
- executing an action responsive to the message.

The program instructions may cause the second device to perform one or more or all steps of a method according to the second aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 a schematic block diagram of a network communication system according to one or more embodiments.
FIG. 2 is a message sequence chart illustrating an exemplary embodiment of a method when an overload occurs at a first device.
FIG. 3 is a message sequence chart illustrating an exemplary embodiment of a method when the overload occurs at a second device.
FIG. 4 is a schematic block diagram of a network communication system according to one or more embodiments.
FIG. 5 is a schematic diagram of an example device which can be used to implement one or more devices described herein or carry out one or more methods described herein.
FIG. 6 is a message sequence chart illustrating an exemplary embodiment of a method when the overload occurs at a node.
FIG. 7 is a message sequence chart illustrating an exemplary embodiment of a method when the overload occurs at a controller or a subsystem thereof.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments will be described using, as an example of an access architecture to which the exemplary embodiments may be applied, a radio access architecture based on an Open Radio Access Network ('O-RAN') architecture. without restricting the exemplary embodiments to such an architecture, however.

Some other examples of other options for suitable systems may be the universal mobile telecommunications system (UMTS) radio access network (UTRAN or E-UTRAN), long term evolution (LTE, the same as E-UTRA) or any combination thereof.

5G may enable using multiple input-multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may have multiple radio interfaces, namely below 6 GHz, cmWave and mmWave, and also being integratable with existing legacy radio access technologies, such as the LTE. Integration with the LTE may be implemented, at least in the early phase, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6 GHz-cm Wave, below 6 GHz-cm Wave - mm Wave). 5G networks may include network slicing in which multiple independent and dedicated virtual sub-networks (network instances) may be created within the same infrastructure to run services that have different requirements on latency, reliability, throughput and mobility.

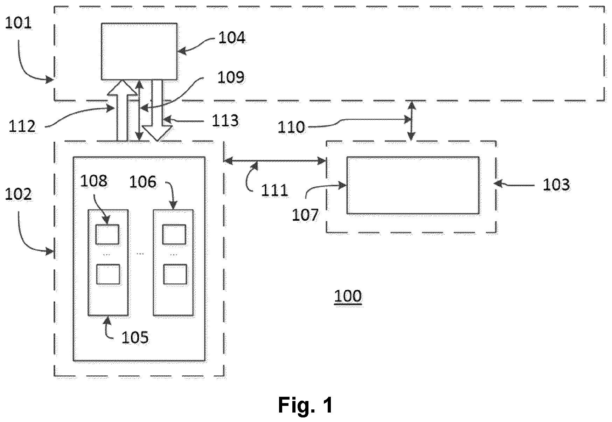

Fig. 1 is a schematic block diagram of a system 100 comprising one or more network devices 101 to 103. The devices provide various network functions. Devices may house one or more network functions. In Fig. 1, two exemplary functions 105 and 106 are shown in device 102. Other devices than 102 may also hold network functions, e.g. device 101 holds a network function 104. The network functions may provide one or more services 108. Communication between devices is performed through appropriate interfaces. In Fig. 1, interfaces between devices are schematically shown as arrows 110 - 112. Examples of interfaces include, in a non-limiting fashion, the NG-C interface between AMF (Core) - gNB (which is part of the radio access network ('RAN')), or the Xn interface between two gNBs, or as detailed later, an E2 interface as defined by Open-RAN between a near real-time RAN intelligent network controller ('Near RT RIC') and E2 RAN nodes.

A service provided by a network function of a first device e.g. enables access by a second device messages and measurements performed by the first device, and / or control of the first device by the second device. Other services perform other tasks.

A network function, a service or other types of logic objects (e.g. applications) may be overloaded. 'Overloaded' means that the limits of resources available to a network function, or a specific service provided by a network function, are such that no additional tasks can be performed compared to the current load. An object may thus be in an overloaded state or a non-overloaded state while other objects or services within the same network function may be in a different state.

Two exemplary use cases that may appear are as follows:
(a) Overload occurs at a device providing a service ('first device):
   The resources required for providing one or more services reach or exceed the capacities of the first device (e.g. the bandwidth limit for sending information over the interface is reached or exceeded, the computational capacity allocated to a specific service has been reached (e.g. during calculation of a KPI during the execution of a "KPI report service", a service must carry out fast calculations before reporting the KPI, and if too many KPIs at a high reporting rate are demanded then this will overload the service).
   The resources required by a specific network function reach or exceed the resources allocated to this network function within its device.
(b) Overload occurs at a device that subscribed to a service ('second device):
   The processing resources allocated on the side of the second device to the messages received from a network function or service are insufficient to process the incoming data. E.g. the number of messages received from a given service (e.g. indication messages) exceed the number of messages that can be handled by the controller or a subsystem that subscribed to the service.

Overload may result from various other limitations than those mentioned in the above use cases, for example a limit in energy consumption by resources assigned to a service.

Aspects described herein regarding the first and second use cases can be seen independently from each other, i.e. both need not be implemented jointly.

According to one or more embodiments, when an overload situation occurs at a device, a message representative of the overload state is generated by this device.

According to one or more embodiments, the message is sent at least to a device with which the overloaded device interacts for a service. The message may be sent to more than one device.

The message comprises information describing the overload state at least at the granularity of an individual overloaded service, i.e. the specific identity of an overloaded service is provided in conjunction with its state.

Optionally, the message explicitly identifies in addition the network function providing the overloaded service.

A device receiving the overload message may perform one or more actions depending on the entities identified in the message and the overload state information received for each entity.

The device receiving an overload state message can provide a response function of the level of the entities for which an overload state is described.

For example, supposing that a first device provides a service to a second device, if the message identifies a given service within a network function for which an overload situation exists at the second device, the first device may stop sending data from that service to the second device, e.g. it may pause carrying out the given service for the second device.

The above may be applied to more than one service and the message may carry corresponding information. The first device may however continue providing services which are not associated with an overload situation at the second device. The second device may also subscribe to additional services other than those for which the second device is in an overload situation.

If the second device receives an overload message from the first device, indicating that an overload situation exists at the first device for a given service of given network function, the second device should refrain from sending further subscription requests to that given service.

The second device may however continue subscribing to non-overloaded services from the given network function, since it has precise information at the service level for this given network function.

According to one or more embodiments, an overload state message can also comprise information representative of a change from an overloaded state to a non-overloaded state.

According to a variant example, a same overload state message may contain information representative of changes to and from an overloaded state for several entities (services, applications...).

A device receiving a message with information representative of changes from an overloaded state to a non-overloaded state for one or more entities may result in this device cancelling part or all actions previously taken in response to an overloaded state for these entities.

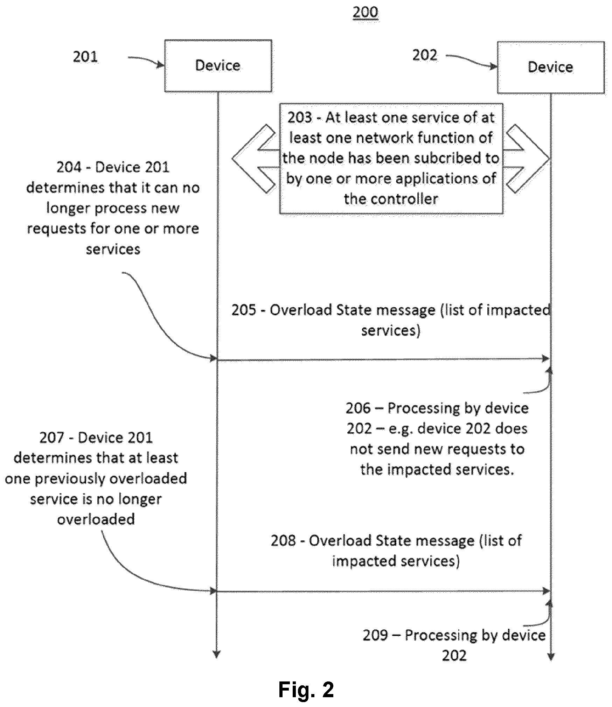

Fig. 2 is a message sequence chart of a method 200 involving a first device 201 housing at least one network function, each network function offering at least one service for access by a second device 202. Fig. 2 concerns a use case where an overload situation occurs at the first device.

At the first device 201, the method according to one or more embodiments comprises:
- receiving a request from a second device, wherein the request is for a given service offered by the first device and responsive to the request, providing said service (at 203);
- determining (at 204) a change to an overloaded state of resources available, at the first device, for providing said given service,
- sending (at 205) a message to the second device 202, wherein the message comprises information explicitly identifying at least the given service ('impacted service') and the change to an overloaded state.

Further, at the first device 201, the method according to one or more embodiments can comprise:
- determining (at 207) a change from an overloaded state to a non-overload state of resources available, at the first device, for said given service.
- sending (at 208) a message to the second device 202, wherein the message comprises information explicitly identifying at least the given service ('impacted service'), and the change to a non-overloaded state.

Optionally, the message can identify more than one service in more than one network function.

A same message may at the same time identify entities for which different state changes occur, i.e. to an overloaded state and to a non-overloaded state.

At the second device 202, the method comprises:
- sending a request to a first device 201, wherein the request is for a given service offered by a network function of the first device, receiving a positive response to the request from the first device (at 203);
- receiving (at 205) a message from the first device 202, wherein the message comprises information explicitly identifying the given service and an information indicative of a change to an overloaded state for resources available for resources available to the given service;
- processing (at 209) the message.

Processing may e.g. comprise updating a list stored in memory with information representative of an overloaded state or a non-overloaded state of at least individual services. The second device then uses this list to decide whether it can or cannot subscribe to a service. For example, according to some embodiment, the second device would refrain from sending new requests to an overloaded service.

Further, at the second device 202, the method according to one or more embodiments can comprise:
- receiving (at 208) a message from the first device 202, wherein the message comprises information explicitly identifying at least a given service provided to the second device, and a change to a non-overloaded state;
- processing (at 209) the message.

Processing may e.g. comprise updating the list mentioned above.

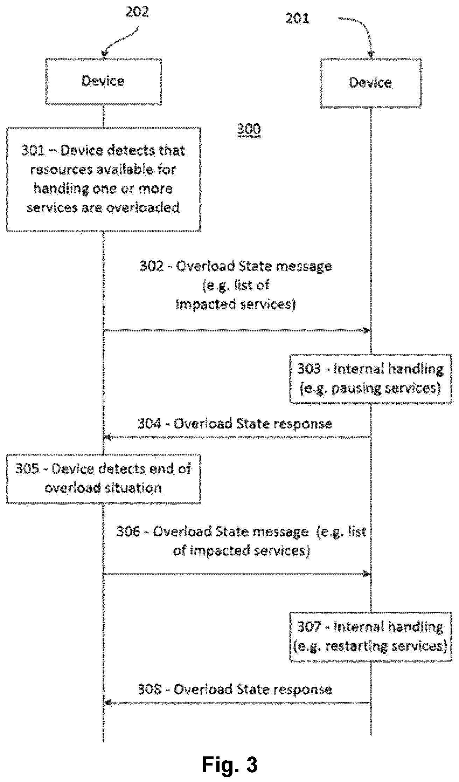

Fig. 3 is a flowchart of a method 300 involving the first device 201 housing at least one network function, each network function offering at least one service for access by the second device 202.

Fig. 3 concerns a use case where an overload situation occurs at the second device for resources available for handling a service of the first device, these services being provided to the second device.

At the second device 202, the method according to one or more embodiments comprises:
- determining (at 301) a change to an overloaded state of resources available at the second device for handling a given service offered by the given network function, wherein the second device has subscribed to the given service;
- sending (at 302) a message **to** the first device 201, wherein the message comprises information explicitly identifying at least the given service, and the change to an overloaded state.

Further, at the second device 202, the method according to one or more embodiments can comprise:
- determining (at 305) a change from an overloaded state to a non-overload state of resources available, at the second device, for handling the given service.
- sending (at 306) a message to the first device 201, wherein the message comprises information explicitly identifying at least the given service, and the change to a non-overloaded state.

The message can identify more than one service, including if these services are located in more than one network function.

A same message may at the same time identify entities for which different state changes occur, i.e. to an overloaded state and to a non-overloaded state.

At the first device 201, the method according to one or more embodiments comprises processing the messages received from the second device. Processing may include pausing (at 303) and/or resuming (at 307) services as a function of the capability of the second device to handle these services as indicated by the overloaded or non-overloaded state.

Optionally, the first device may inform the second device of the measures taken in response to a message (see e.g. overload state responses 304 and 308).

A device may house several subsystems (e.g. one or more distinct software applications) which may subscribe to network functions and services of a same other device. According to one or more embodiments, the device housing these subsystems consolidates overload state information to be sent to a given other device from all its subsystems.

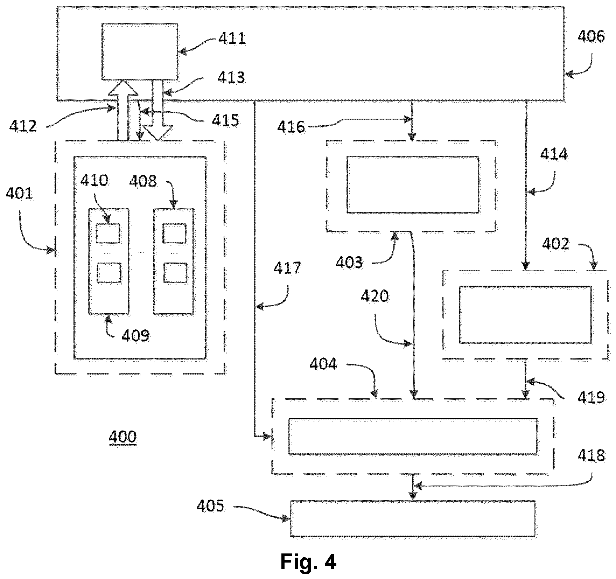

One or more embodiments relating to an Open-RAN context will now be described in conjunction with Fig. 4, Fig. 6 and Fig. 7.

Fig. 4 is a schematic block diagram of a system 400 comprising one or more radio access network nodes 401 to 405 and a controller 406. Controller 106 is also a network function. System 400 is a more detailed version of system 100. The radio access network nodes provide various radio access network ('RAN') functions required for providing devices such as user equipment ('UE') or other end devices (not shown) with wireless connectivity to the network. Nodes may house one or more RAN functions. In Fig. 4, two exemplary RAN functions 408 and 409 are shown in node 401. The network functions may comprise one or more services 410. Other nodes than 401 may also hold RAN functions and corresponding services. The controller 406, or one or more subsystems thereof such as software application 411 run by the controller, are configured to subscribe to a service of a node. In the specific context of Open RAN, a request for a service is named a request for subscribing to this service. It may also be a request for controlling a service.

A service provided by a node enables access by the controller or a subsystem thereof to messages and measurements and / or control of the node by the controller or subsystem. A report service can provide information on how a particular device is currently configured (e.g. a set of parameters) or how resources controlled by a controller are configured. For example, in 3GPP, the DU reports its configuration to the CU, and/or the configuration of radio resources it owns or controls.

Subscription and other communication with nodes are performed through an appropriate interface. In Fig. 4, interfaces between the controller and a node or between two nodes are schematically shown as arrows 414 - 420.

Two exemplary use cases that may appear are as follows:
(1) Overload occurs at a node - this corresponds to use case (a) mentioned earlier, where the node is a device providing a service;
(2) Overload occurs at the controller - this corresponds to use case (b) mentioned earlier, where the controller is a device subscribing to or consuming a service.

According to one or more embodiments, when an overload situation occurs, be it a radio access network node or at the level of a controller or a controller subsystem, a message representative of the overload state is sent by the overloaded node, controller or controller subsystem. The message comprises information describing the overload state at the granularity of an individual service provided by a network node subsystem, or an individual service subscribed to by a controller subsystem.

For example:
(a) If the overload situation occurs in a node, the overload state message identifies-one or more specific services for a given RAN function. The message is sent to the controller of the subsystem using a service from the node with the overload situation. Non-overloaded services may then still be used, as opposed to having an entire RAN function becoming unavailable.
(b) If the overload situation occurs at the controller, the overload message identifies one or more specific services within a given RAN function. The node receiving the message may then take appropriate action, such as for example pausing the corresponding service or services.

According to one or more embodiments, an overload state message can also comprise information representative of a change from an overloaded state to a non-overloaded state.

According to a variant example, a same overload state message contains information representative of changes to and from an overloaded state for several entities.

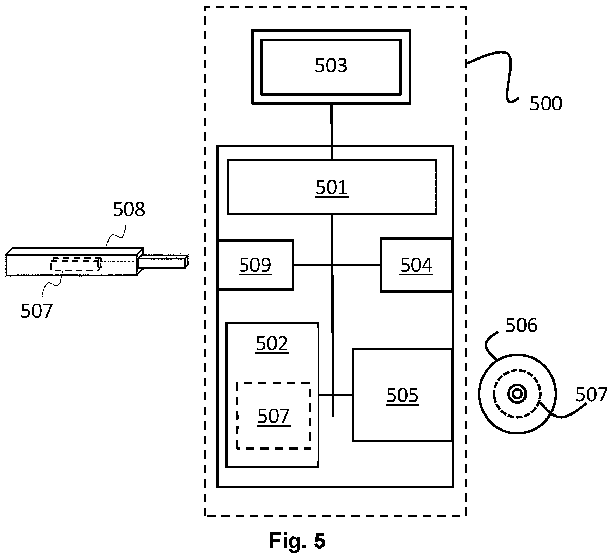

The controller, the RAN network functions and the services may be implemented using software run on appropriate hardware platforms. Fig. 5 is a block diagram of an example embodiment which can be used to implement a controller or a node. The apparatus 500 may be configured to perform one or more or all functions of controller 406 or nodes 401 to 405 or devices 201 and 202 disclosed herein. The apparatus 500 may be configured to perform one or more or all steps of a method disclosed herein.

As represented schematically, the apparatus 500 may include at least one processor 501 and at least one memory 502. The apparatus 500 may include one or more communication interfaces 504 (e.g. network interfaces for access to a wired / wireless network, or both) connected to the processor and configured to communicate via wired / non wired communication link(s). The apparatus 500 may include user interfaces 503 (e.g. keyboard, mouse, display screen, etc...) connected with the processor. The apparatus 500 may further include one or more media drives 505 for reading a computer-readable storage medium 506. The apparatus 500 may further include one or more interfaces 509 for reading a removable storage device 508.The processor 501 is connected to each of the other components 502, 503, 504, 505 in order to control operation thereof.

The memory 502 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 502 may be configured to store, amongst other things, an operating system of the apparatus 500 and / or one or more computer program code of one or more software applications. The RAM of the memory 502 may be used by the processor 501 for the temporary storage of data.

The processor 501 may be configured to store, read, load, execute and/or otherwise process instructions 507 stored in a computer-readable storage medium 506, 508 and / or in the memory 502 such that, when the instructions are executed by the processor, the processor causes the apparatus 500 to perform one or more or all steps of a method described herein for the concerned apparatus.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, BluRay, etc...), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause the apparatus to the considered function(s). The means may include circuitry (e.g. processing circuitry) configured to perform the considered function(s).

As used in this application, the term "circuitry" may refer to one or more or all of the following:
- hardware-only circuit implementations (such as implementations in only analog and/or digital circuitry) and
- combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
- hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

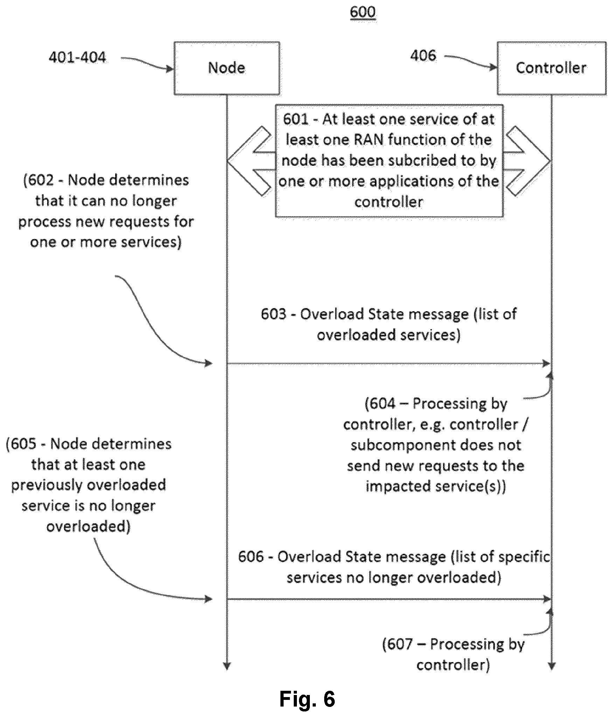

Fig. 6 is a message sequence chart illustrating an exemplary embodiment of a process 300 for overload management when the overload occurs at a node, e.g. such as in use case (2) above. The node of Fig. 6 may for example be any one of the nodes 401 to 404 of Fig. 4, i.e. a node offering RAN functions and services to the controller. The controller of Fig. 6 is for example the controller 406 of Fig. 4. In the chart of Fig. 6 and for the purpose of showing a case where overload can occur, it is supposed that the controller or a subsystem thereof has previously subscribed to at least one service of at least one RAN function of the node (at 601). At one moment, the node determines that one or more services that the controller, or subsystem thereof, subscribed to are overloaded (at 602). The node then sends an overload state message to the controller (at 603). The message comprises information identifying at least the one or more overloaded services and the fact that these services are overloaded.

The message is then processed by the controller (at 604). E.g. the controller maintains a list of overloaded services. The list is updated based on the content of the overload state message.

In response to the message, the controller can carry out one or more actions, depending on the overloaded services identified in the message.

For example:
- the controller may refrain from sending new subscription and/or control requests to the services identified in the message;
- at the same time, the controller may continue to subscribe to a non-overloaded service of the node, or maintain an existing subscription to a service that is not overloaded.

At 605, the node determines that a previously overloaded service is no longer overloaded. At 606, another overload state message is sent by the node, identifying service(s) that were previously in an overloaded state, but are not overloaded anymore. At 607, this message is processed by the controller. For example, the controller may carry out one or more of the following actions:
- update of the list of overloaded entities it maintains;
- subscribe to services that are not overloaded anymore.

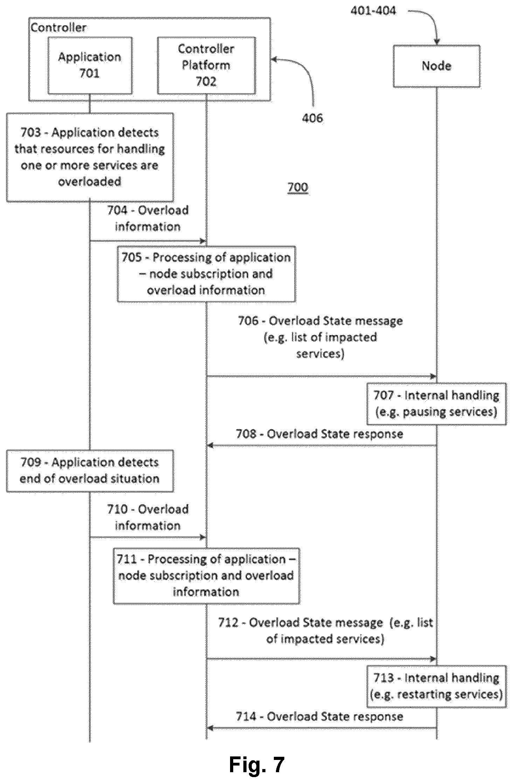

For clarity reasons, Fig. 6 does not detail communication between logical entities within controller 406. Controller 406 may comprise certain subsystems, e.g. applications, which may be the actual consumers of services provided by the services of the nodes. These subsystems communicate with a controller platform housed by the controller 406. Fig. 7 provides an example of this.

Fig. 7 is a message sequence chart illustrating an exemplary embodiment of a process 700 for overload management when the overload occurs at a controller, e.g. such as in use case (b) above. The node of Fig. 7 may for example be any one of the nodes 401 to 404 of Fig. 4, i.e. a node offering RAN functions and services to the controller. The controller of Fig. 7 is for example the controller 406 of Fig. 4. In Fig. 7, the controller is shown with a controller platform 702 and an application 701. Similar to Fig. 6, for the purpose of showing a case where overload can occur, it is supposed that application 701 has previously subscribed to at least one service of at least one RAN function of the node.

At 703, the application 701 detects that controller resources allocated to one or more services or one or more RAN functions are overloaded. The application forms corresponding overload information, which is transmitted to the controller platform 702. The controller platform processes the overload information at 705 and generates an overload state message which it sends to the node at 706. The message comprises information identifying one or more specific services for which the application 701 is overloaded. The node processes the message at 707 and may carry out one or more actions in response. For example, the node may pause the_services identified in the message. At 708, the node sends an overload state response message to the controller. The response message can for example identify the steps taken by the node in response to the initial overload state message.

At 709, the application 701 determines that it is no longer overloaded for one or more services. At 710, the application sends information representative of the change in overload status to the controller platform, identifying service(s) for which the application was previously in an overloaded state, but for which it is no longer overloaded. At 711, this information is processed by the controller and another overload state message is sent to the node at 472. This overload state message comprises information identifying the services for which the application is no longer overloaded. The node processes the message at 713 and may carry out one or more actions in response. For example, the node may resume previously paused services.

In what follows, an exemplary embodiment in the context of an Open-RAN network will be described.

The Open-Radio Access Network, O-RAN, is an evolution of the Next Generation RAN (NG-RAN) architecture, first introduced by the GSMA's 3GPP in release 015 (5G version 1) in technical specification TS 38.401. O-RAN allows any organization to create RAN products that can interoperate using the specified interfaces. The Open-Radio Access Network, O-RAN, Alliance specification defines in particular a near-real time RAN intelligent controller, 'Near RT RIC'. The Near RT RIC is a logical function which allows communication of an application layer it houses with on one hand, the non - real-time RIC ('Non RT RIC'), and on the other hand, with the RAN infrastructure layer. The non real-time RIC executes its functions in one second or more, whereas the near real-time RIC executes functions between 10 milliseconds and one second. Consequently, the two types of controllers are responsible for different types of functions. The controllers enable control and optimization of RAN components and resources through their interface with these components and resources.

A Near RT RIC runs applications (called 'xApps', as opposed to 'rApps' run by a Non Near RT RIC), which can consume data generated services provided by RAN functions running in the infrastructure nodes. The Near RT RIC communicates with the nodes via an interface, allowing applications running on the Near RT RIC to establish a direct link with RAN functions of the nodes. Within Open-RAN, this interface is called the 'E2' interface. The E2 interface is defined in [1] and nodes implementing this interface are referred to as 'E2' Nodes. The E2 interface comprises two protocols - the E2 Application Protocol (E2AP) and the E2 Service Model (E2SM) - and runs on top of the SCTP protocol. The E2AP is a protocol that coordinates how the Near RT RIC and the E2 Nodes communicate with each other - it provides a basic set of services. E2AP messages can embed different E2SMs, which implement specific functionalities, e.g. RAN metrics reports, RAN parameter control etc.... Each E2 Node exposes a number of RAN functions and the RIC services of each RAN function. An application wishing to use a RIC service of an E2 Node issues a subscription request to the corresponding RAN function. The request is transmitted to the corresponding E2 Node by the Near RT RIC. An application is likely to consist of one or more microservices, which consume data from a service and which may also provide data. The application is independent of the Near-RT RIC and may be provided by any third party. The E2 enables a direct association between the application and the RAN functionality.

A RAN function can be seen as a network node subsystem, whereas a RIC service can be seen as a service provided by this subsystem.

At the lowest level, the E2AP handles interface management procedures such as E2 setup, E2 reset, E2 Indication and E2 reporting of errors and Near RT RIC service updates i.e. the exchange of the list of the RAN functions supported by the E2 Node.

An exemplary O-RAN network comprises a Near RT RIC 101 and various nodes of an O-RAN infrastructure, such as:
- a base station ('O-eNB');
- an Open-RAN Central Unit - Control Plane ('O-CU-CP'), which is a logical node hosting the Radio Resource Control ('RRC') and the control plane part of the Packet Data Convergence Protocol ('PDCP');
- an O-RAN Central Unit - User Plane ('O-CU-UP'): a logical node hosting the user plane part of the PDCP protocol and the Service Data Adaptation Protocol ('SDAP');
- an O-RAN Distributed Unit: ('O-DU'): a logical node hosting Radio Link Control / Medium Access Control / Higher Physical ('RLC/MAC/High-PHY') layers based on a lower layer functional split;
- an O-RAN Radio Unit ('O-RU'): a logical node hosting Low-PHY layers and RF processing based on a lower layer functional split.

In the O-RAN architecture, each of the disaggregated network functions O-CU-CP, O-CU-UP and O-DU of a gNB or a combined O-eNB is an E2 Node. An E2 Node can only connect to one Near RT RIC, whereas a Near RT RIC can connect to multiple E2 Nodes. A network function can be implemented either as a network element using a dedicated device, as a software instance running on a dedicated device, or as a virtualized function instantiated on an appropriate platform, e.g. on a cloud infrastructure.

Coming back to the exemplary system of Fig. 4, controller 406 can for example be a Near RT RIC, application 411 can be an xApp, node 401 can be an O-eNB, node 402 can be a O-CU-UP, node 403 can be a O-CU-CP and node 404 can be a U-DU. The interfaces 414 to 417 can be E2 interfaces. Node 405 can be a O-RU. Interfaces 418 to 420 can respectively be an Open Fronthaul, F1-u and F1-c interfaces.

As indicated above, the functionalities of an E2 Node can be accessed and controlled by the Near RT RIC via the RIC services. Such services typically comprise Report, Policy, Control, Query, and Insert. Each RAN function within an E2 Node provides one or more services. An E2 Node connects to the Near RT RIC using the E2 interface and exposes a list of RAN functions providing RIC services. Each RIC service is specified via a corresponding E2 service model ('E2SM'). The list of exposed services is announced during an E2 Setup procedure and may be altered using a RIC Service Update procedure. The E2 Setup procedure is used to establish the E2 interface between the Near RT RIC and an E2 Node. During this procedure, the E2 Node provides:
- A list of supported RIC services provided by each RAN function within the E2 Node. This information is specific to each RAN function in the E2 Node and is defined by a specific E2 Service Model (e.g., E2SM-KPM, E2SM-RC, E2SM-CCC, etc.). In the frame of an Open-RAN network, E2SM models are described in [3].
- A list of E2 Node configuration information.
This information is specific to the E2 Node type and defined by the E2 Node system specifications.

The RIC Service Update procedure is used by the E2 Node to inform the Near RT RIC of any change to the list of supported RIC services and mapping of services to RAN functions within the E2 Node. This information is specific to each RAN Function in the E2 Node and is defined by a specific E2 Service Model.

An application can subscribe to a RAN function and one or more of its services as follows. Assuming that an E2 interface has been set up between a Near RT RIC and an E2 Node, an xApp application can consume services provided by an E2 Node and/or control its behavior via the "RIC Subscription" procedure specified in [1]. An xApp's subscription to RIC services (e.g., Report, Insert, Policy...) provided by the RAN function of an E2 Node is managed by the Near RT RIC platform. Multiple xApps may subscribe to the same E2 Node and same RAN function simultaneously.

The E2 node sends a response to the request. If the E2 Node accepts at least one of the services requested, the E2 Node must reserve the resources and functions required to provide these services. A service may typically include reporting of data by the E2 Node service to the subscribing xApp. In many cases, this data must be computed and processed. E.g. 3GPP key performance indicators (KPIs) need to be obtained and processed before they are reported to the Near RT RIC and transmitted to the xApps. To this end, the RIC Subscription procedure allows the xApp to subscribe to a particular RAN function, using a RAN function identifier ('RAN Function ID'). A RIC Subscription is thus tied to a particular RAN function inside a particular E2 Node.

For RIC services of the type "Report" and "Insert", the RIC subscription will result in the E2 Node sending a stream of E2AP "RIC Indication" messages. This data is produced by the resources and functions allocated by the E2 Node during the E2 subscription procedure. Upon receiving the RIC indication messages, the Near RT RIC platform ensures the delivery of their contents to the corresponding xApps which may generate subsequent E2 messages to the E2 Node (RIC Control, RIC Subscription and/or RIC Query procedures).

According to one or more example embodiments, the overload state management procedures of Fig. 6 and Fig. 7 are implemented as follows in an O-RAN context. The procedure provides RIC service level information on the current overload state of an E2 Node or Near-RT RIC.

According to one example embodiment, overload state information is encoded in a message using RAN Function IDs and a RIC Service Types (Report, Insert, Control, Policy, Query, etc.). Optionally, E2SM specific encoded RIC Overload Information Elements ('IE') are provided in the message. The message is carried as a transparent container over the E2AP protocol. The procedure supports independent lists to add and remove specific RIC Services from an overload list maintained by a recipient of the message.

According to one example embodiment, the process for managing an overload situation occurring at an E2 Node comprises:
1. An E2 Node is providing one or more RIC services (Policy, Report, etc.) for one or more RAN functions.
2. The E2 Node determines that it can no longer process any new request for a particular RIC service under a particular RAN Function. For example, from now onwards it will not be able to accept any new request for the Report service of a specific RAN function exposing E2SM-KPM services. This may be due to E2 node internal resource prioritization, current load etc.
3. The E2 Node sends an E2 Overload State indication message with a list of RAN functions impacted and their RIC services. This indication message is such as message 303 in Fig. 3.
4. While the E2 Overload State is present, the Near-RT RIC should not send any new service requests for the impacted RIC services.
5. The E2 node determines that the overload situation has changed and sends a new E2 Overload State indication message to the Near-RT RIC to indicate that the E2 Node is again able to accept new service requests for the previously overloaded specific RIC Services.

The above process uses the 'RIC Indication' message of O-RAN, but with a specific content. Detailed examples of the content and of new information elements that can be used in this context are given later.

According to one example embodiment, the process for managing an overload situation occurring at a controller comprises:
1. The xApp determines that it can no longer process one or more RIC services provided by one or more RAN functions of an E2 Node. This may be due to xApp internal or cloud resource prioritization, current load, etc.... The xApp sends the overload-related information to the Near-RT RIC platform using the Near-RT RIC internal APIs.
2. The Near-RT RIC sends the E2 Overload State message to the E2 Node which contains the list of impacted/overloaded RAN functions and RIC services.
3. While the E2 Overloaded State remains in place, the E2 Node should not send any new service **data** or indication messages from the impacted services. In other words, it should pause processes related to the impacted RIC services. It can optionally send a Response message to the Near-RT RIC containing information about the functions and services that have been paused.
4. The xApp determines that the overload situation has changed and provides the Near-RT RIC with the information about the RIC services it can once again handle.
5. The Near-RT RIC sends a new E2 Overload State message to the E2 Node to indicate that from now onwards, the E2 Node can resume certain services that were previously paused. The E2 Node can respond optionally to this message confirming the resumption of impacted RIC services.
The above process introduces an additional procedure to the E2 interface. It defines a new E2AP procedure, initiated by the Near-RT RIC.
Table 1 is an example embodiment of the contents of an overload state message. The format shown may be used both for declaring an overloaded state related to RAN functions and optionally services, and for declaring that the state changed to not overloaded. In the example of Table 1, the message contains a loop of identifiers of RAN function that are overloaded, and a loop for identifiers of services that are overloaded within a given RAN function. Similar loops are shown for declaring that services are not overloaded any more.

**Table 1**

| **IE/Group Name** | **Presence** | **Range** | **IE type and reference in [1]** | **Semantics description** |
|---|---|---|---|---|
| **Message Type** | M | | 9.2.3 | |
| **Transaction ID** | M | | 9.2.33 | . |
| **RAN function in Overload List** | 0..1 | | | List of RAN Functions and services to be added to overload list |
| **>RAN function Item** | | 1 to maximum number of RAN function IDs. | | |
| >> **RAN Function ID** | M | | 9.2.8 | |
| **>>List of RIC Services impacted** | | 1 .. <maxofRIC services> | | |
| **>>>RIC Service Type** | M | | A | |
| **>>> RIC Overload information** | O | | B | Required when E2SM specific overload information is relevant |
| **RAN Functions no longer in Overload list** | 0..1 | | | List of RAN Functions and services to be removed from the overload list |
| **>RAN Functions item** | | 1 .. <maxofRANfunctionlD> | | |
| **>> RAN Function ID** | M | | 9.2.8 | |
| **>>List of RIC Services impacted** | | 1 .. <maxofRIC services> | | |
| **>>>RIC Service Type** | M | | A | |
| **>>> Overload information** | O | | B | Required when E2SM specific overload information is relevant |

Information element A provides the list of defined RIC Service types. Exemplary embodiments of information elements A and B of Table 1 are shown respectively in Table 2 and Table 3. Information element B provides parameters to be used when processing an overload state message.

**Table 2**

| **IE/Group Name** | **Presence** | **Range** | **IE type and reference** | **Semantics description** |
|---|---|---|---|---|
| A - RIC Service Type | M | | ENUM (Report, Insert, Control, Policy, Query, ..) | |

**Table 3**

| **IE/Group Name** | **Presence** | **Range** | **IE type and reference** | **Semantics description** |
|---|---|---|---|---|
| B - RIC Overload Information | M | | OCTET STRING | Defined in RAN Function specific E2 Service Model E2SM [3] |

The principles described in conjunction with the exemplary embodiments may also be applied to other kinds of communications networks than an O-RAN network and to other types of network interfaces than an E2 interface. In particular, the exemplary embodiments can find application in the context of a Wi-Fi (IEEE 802.11) network architecture, or within the context of 3GPP-defined network interfaces other than E2. Interfaces such as Xn, F1, NG, E1 etc... For example, an access point or base station ('gNB') may be in an overload state in terms of connected terminals (User Equipment, or 'UE'). The access point can indicate over an Xn interface that incoming handovers are not supported (as long as the overload state lasts). This corresponds to a specific service provided by the access point, in this case the 'Basic mobility' service. The access point would however maintain support for self-organizing network ('SON') services and/or other "Global procedures" (which would map to services) offered by the Xn interface.

### References

[1] O-RAN Working Group 3 (Near-RT RIC and E2 Interface), E2 Application Protocol (E2AP)- O-RAN.WG3.E2AP-R003-v04.00, October 2023.
[2] O-RAN Working Group 3 (Near-RT RIC and E2 Interface), E2 General Aspects and Principles (E2GAP) - O-RAN.WG3.E2GAP-R003-v04.01, October 2023.
[3] O-RAN Working Group 3 (Near-RT RIC and E2 Interface), E2 Service Model (E2SM) - O-RAN.WG3.E2SM-R003-v04.00, October 2023.

## Claims

1. A method comprising, at a first communication network device (201, 401 - 404):
- receiving a request from a second network device (202, 406), wherein the request is for a given service (108, 410) to be provided by a network function (105, 106, 408, 409) of the first network device;
- responsive to the request, providing (203, 601) said given service;
- determining (204, 207, 602, 605) an overload state change of resources required, by the first device, for said given service provided by said network function, wherein an overload state change type is one of a change from an overloaded state to a non-overloaded state or a change from a non-overloaded state to an overloaded state;
- sending (205, 208, 603, 606) a message to the second device, wherein the message comprises information explicitly identifying at least said given service provided by said network function and the type of overload state change.

2. The method according to claim 1, wherein if overload state changes are determined for (a) more than one service provided by a network function of the first device and/or (b) services within more than one network function of the first device, the message comprises information explicitly identifying each of said services for which overload state changes were determined.

3. The method of claim 1 or 2, said message further comprising an explicit identification of each network function providing a service identified in the message and for which an overload state change occurred.

4. The method of one of the claims 1 to 3, wherein the message further comprises information describing the resources of the first device concerned by the overload state change.

5. The method according to one of the claims 1 to 4, wherein said resources comprise at least one among:
- resources allocated by said first device to said given service;
- bandwidth available on an interface between the first device and the second device for transmitting data provided by said given service from the first device to the second device.

6. The method according to one of the claims 1 to 5 wherein providing a given service comprises sending data (112) generated by the given service to the second device, the method further comprising:
- receiving (302, 306, 706, 712) from the second device a message indicative of an overload state change of resources of the second device available for handling processing concerning the given service;
- executing an action (303, 307, 707, 713) responsive to the overload state change of the resources of the second device;
- reporting (304, 308, 708, 714) the action to the second device.

7. The method according to claim 6, wherein, when the overload state change is towards an overloaded state of resources of the second device for processing data sent by the first device to the second device when providing the given service, the action comprises pausing (303, 707) the given service.

8. The method according to claim 6 or 7, wherein, when the overload state change is towards a non-overloaded state of the resources of the second device for processing data sent by the first device to the second device when providing the given service, the action comprises resuming (307, 713) the given service if it was paused.

9. The method according to one of the claims 1 to 8, wherein a service is configured for at least one among;
- carrying out measurements for the second device and report measurement results;
- enabling control of the first device by the second device;
- providing information on a configuration of the first device or a configuration of resources controlled by the first device.

10. The method according to one of the claims 1 to 9, wherein the first device is a Radio Access Network, RAN, node, the second device is a RAN intelligent controller, RIC, for controlling the RAN nodes, the subsystem is a RAN function and the service is a RIC service.

11. The method according to one of the claims 1 to 10, wherein the first and second devices communicate through an O-RAN E2 interface and the RIC is a Near Real-Time RIC.

12. A method comprising, at a second communication network device (106, 406):
- sending at least one request to a first network device (201, 401-404), wherein the request is for a given service (108, 410) to be provided by a network function (105, 106, 408, 409) of the first network device;
- responsive to the request, receiving data generated by the service;
- receiving (205, 603) a message from the first device, wherein the message comprises information explicitly identifying at least said service and a type of overload state change of resources required, by the first device, for said service, wherein an overload state change type is one of a change from an overloaded state to a non-overloaded state or a change from a non-overloaded state to an overloaded state;
- executing an action (206, 604) responsive to the message.

13. The method of claim 12, wherein, if overload state changes occurred at the second device for a plurality of services, the message explicitly identifies said plurality of services.

14. The method of claim 12 or 13, said message further comprises an explicit identification of each network function providing a service identified in the message and for which an overload state change occurred.

15. The method of one of the claims 12 to 14, wherein the action (206, 604) comprises prohibiting sending additional requests for overloaded services identified in the message.

16. The method according to one of the claims 12 to 15, comprising
- determining (703) an overload state change of resources allocated, by the second device, for handling processing concerning said given service,
- sending (706) a message to the first device, wherein the message comprises information explicitly identifying at least the given service and the type of overload state change.

17. The method according to one of the claims 12 to 16, wherein the message further comprises information describing the resources of the second device concerned by the overload state change.

18. The method according to one of the claims 12 to 17, wherein the first device is a Radio Access Network, RAN, node, the second device is a RAN intelligent controller, RIC, for controlling the RAN nodes, the subsystem is a RAN function and the service is a RIC service; and wherein the first and second devices communicate through an O-RAN E2 interface and the RIC is a Near Real-Time RIC.

19. A first device (201, 401 - 404) comprising means for performing the method of any of claims 1 to 11.

20. A second device (106, 406) comprising means for performing the method of any of claims 12 to 18.
